# EUROPÄISCHE PATENTSCHRIFT

(11) **EP 2 303 496 B1**
(45) Veröffentlichungstag und Bekanntmachung des Hinweises auf die Patenterteilung: **14.06.2017**
(21) Anmeldenummer: 09769059.8
(22) Anmeldetag: 27.04.2009
(51) Int. Cl.: B23D 49/16

(54) **HANDHUBSÄGEMASCHINE**
HANDHELD JIGSAW
SCIE SAUTEUSE MÉCANIQUE MANUELLE

(30) Priorität: 26.06.2008 DE 102008002678
(43) Veröffentlichungstag der Anmeldung: 06.04.2011
(73) Patentinhaber: Robert Bosch GmbH, 70442 Stuttgart (DE)
(72) Erfinder: KAISER, Hans, CH-3297 Leuzigen (CH); CASOTA, Marcel, CH-4460 Gelterkinden (CH); PLATZER, Joachim, 71686 Remseck-Hochberg (DE); KOEDER, Thilo, 70839 Gerlingen (DE); HOFFMANN, Ulli, 75223 Niefern-Oeschelbronn (DE); KOEGEL, Jan, 60056 Mount Prospect (US)
(86) Internationale Anmeldenummer: PCT/EP2009/055025
(87) Internationale Veröffentlichungsnummer: WO 2009/156210

(56) Entgegenhaltungen:
- GB-A- 2 399 314

## Beschreibung

### Stand der Technik

Die vorliegende Erfindung geht aus von einer Handhubsägemaschine nach dem Oberbegriff des Anspruchs 1. Eine solche Handhubsägemaschine ist der GB 2 399 314 A zu entnehmen. Es sind Scroll-Stichsägemaschinen mit um seine Längsachse schwenkbarem Sägeblatt bekannt, mit denen Kurven komfortabler zu sägen sind, als mit herkömmlichen Stichsägen, weil das Sägeblatt gemeinsam mit der Hubstange relativ zur Stichsägemaschine tangential zur zu sägenden Kurve von Hand ausrichtbar ist, ohne dass die komplette Stichsäge dabei gedreht werden muss.

Nahezu alle bekannten hochwertigen Stichsägen arbeiten mit einstellbarem Pendelhub, bei dem das Sägeblatt beim Sägen -neben der axialen Auf- und Abbewegung - quer zur Längsachse in der Ebene Vorschubrichtung pendelnd angetrieben wird. Dies verbessert die Schneidleistung. Der Pendelhub wird dabei meist durch einen Pendelhebel mit Sägeblattführungsrolle direkt auf den Sägeblattrücken übertragen. Die Sägeblattführungsrolle umgreift den Sägeblattrücken formschlüssig abrollbar. Sie sichert dabei, dass das Sägeblatt stets geradeaus nach vorn gerichtet ist und verhindert eine Änderung dieser Sägeblattposition. Daher muss bei den bekannten Scroll-Stichsägen im Scroll-Modus der Pendelhub deaktiviert werden und ist dabei nicht aktivierbar, weil dabei das Sägeblatt seine Geradeausposition verlässt und das nur kann, wenn es außer Eingriff mit dem Pendelhebel bzw. der Pendelrolle ist. Wegen des fehlenden Pendelhubs haben die bekannten Stichsägen im Scroll-Modus eine verminderte Schneidleistung.

### Offenbarung der Erfindung

### Vorteile der Erfindung

Die Erfindung mit den Merkmalen des Anspruchs 1 hat den Vorteil, dass die Stichsäge auch im Scroll-Modus mit Pendelhub arbeitet und dass dabei der Sägefortschritt grösser ist. Dies wird dadurch erreicht, dass die Hubstange manuell oder mittels Motor bei aktiver Pendelung drehbar ist. Außerdem wird die Ergonomie und Arbeitssicherheit verbessert, da geringere Bedienkräfte und geringere Vorschubkraft im Scroll-Modus erforderlich ist.

Dadurch, dass die Hubstange sowohl um die eigene Achse drehbar als auch quer zur Achse schwenkbar ist, wobei die Pendelmechanik gemeinsam mit der Hubstange um deren Längsachse drehbar ist, sind Pendelhub und Scroll-Modus miteinander vereinbar. Vorteilhafte Ausführungsformen der Erfindung sind den abhängigen Ansprüchen zu entnehmen.

Dadurch, dass die Pendelmechanik einen Pendelhebel und einen diesen insbesondere um eine Pendelachse, bewegbar halternden Träger aufweist, der drehmitnehmend mit der Hubstange gekoppelt ist und dass diese axial gegenüber dem Träger verschiebbar ist, ist der Scroll-Modus auf einfache Weise gesichert.

Dadurch, dass der Pendelhebel mit Mitteln versehen ist, die in jeder seiner möglichen Drehpositionen die Übertragung eines Pendelhubs auf das Sägeblatt gewährleisten, ist der Scroll-Modus über einen weiten Winkelbereich gesichert.

Dadurch, dass die Mittel als vom Pendelhebel getragene Stützfläche ausgestaltet sind, die über den Drehbereich des Pendelhebels einem Pendelhubgeber hubbeaufschlagbar zugewandt ist, ist die Sicherung des Scroll-Modus mit einfachen Mitteln gegeben.

Dadurch, dass die Stützfläche ringförmig, insbesondere als Kreisringscheibe ausgestaltet ist, die starr mit dem Pendelhebel/Rollenhebel verbunden ist, sind die Mittel zur Sicherung des Scroll-Modus weiter vereinfacht.

Dadurch gekennzeichnet, dass der Träger axial fest, drehbar, insbesondere im Gehäuse, gelagert ist.

Dadurch, dass der Träger mittels Getriebe von außen dreheinstellbar ist, ist der Scroll-Modus einstellbar.

Dadurch, dass der Träger ringförmig die Hubstange umgreift und eine Verzahnung trägt, mit der ein Stellritzel kuppelbar ist, das mittels Stellmechanik, motorisch oder von Hand drehantreibbar ist, ist ein einfacher Einstellmechanismus für den Scroll-Modus geschaffen.

Dadurch, dass die Stellmechanik des Stellritzels eine drehantreibbare Stellwelle aufweist, ist die Stellkraft zum Variieren des Scroll-Modus sicher einleitbar. Dadurch, dass die Stellwelle von Hand drehwinkelkontrolliert dreheinstellbar ist, ist das Variieren des Scroll-Modus mit einfachen Mitteln gegeben.

Dadurch, dass die Stellwelle mit einem Handdrehhebel, Drehknauf oder dergl. koppelbar ist, der mit einem gegenüber einer Winkelskala einstellbaren Zeiger versehen ist, ist die Scroll-Einstellung einfach kontrollierbar.

Dadurch, dass die Drehachse mittels Stellmotor sensorgesteuert dreheinstellbar ist, ist die Sägeblatt-Winkelposition automatisch, besonderes genau und schnell einstellbar und korrigierbar.

### Zeichnung

Nachstehend ist die Erfindung anhand eines Ausführungsbeispiels mit zugehöriger Zeichnung näher erläutert.

Es zeigen
- Figur 1: eine Seitenansicht der erfindungsgemäßen Handwerkzeugmaschine,
- Figur 2: eine räumliche Darstellung der Hubstange mit Hub- und Pendelantrieb,
- Figur 3: eine Frontansicht gemäß Figur 2,
- Figur 4: eine Seitenansicht gemäß Figur 2,
- Figur 5: eine Draufsicht gemäß Figur 2,
- Figur 6: eine vergrößerte räumliche Darstellung nach Figur 2, und die
- Figur 7: eine räumliche Ansicht des Trägers als Einzelheit.

### Ausführungsbeispiel

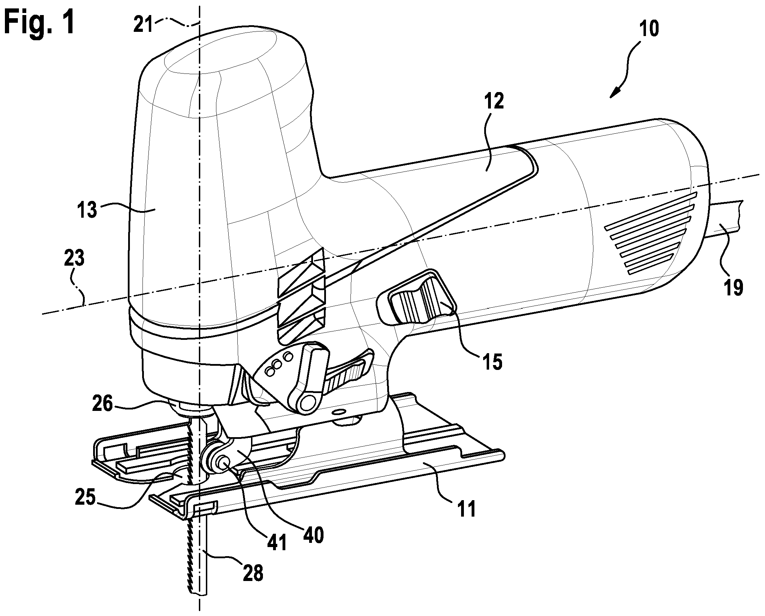

Die Seitenansicht in Figur 1 zeigt eine erfindungsgemäße als Stichsäge 10 ausgestaltete Handwerkzeugmaschine, deren Motor- und Getriebegehäuse 12, 13, deren vorn nach unten durch eine Öffnung 25 einer Fußplatte 11 hindurch austretendes, in einer Spanneinrichtung 26 an einer Hubstange 20 gehaltertes Sägeblatt 28. Außerdem hat die Stichsäge 10 einen Schaltbetätigungshebel 15 zum Ein- und Ausschalten ihres Motors und ein Elektrokabel 19 zur Stromversorgung des Motors. Parallel zum Motorgehäuse 12 erstreckt sich die Längsachse 23 der Stichsäge 10, die die normale Vorschubrichtung beim Sägen definiert.

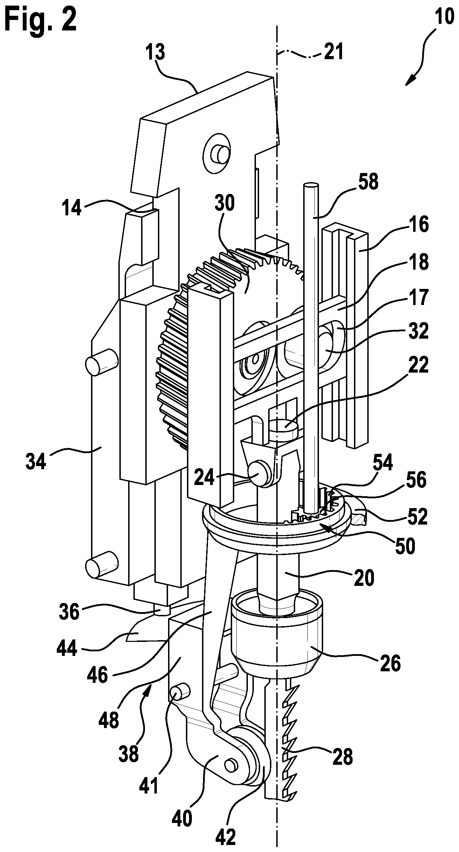

In einem in Figur 2 schematisch skizzierten Getriebegehäuse 13 ist in räumlicher Darstellung die Hubstange 20 mit Hub- und Pendelantrieb gelagert. Dabei ist eine Längsführung 14 eines gegenläufig zur Hubstange 20 bewegbaren, deren Schwingungen kompensierendes Ausgleichsgewichts 34 erkennbar, das auf der Rückseite eines plattenartigen Teils des Getriebegehäuses 13 auf und ab bewegbar gelagert ist. Das Ausgleichsgewicht 34 trägt an seiner Unterseite einen Pendelhubgeber 36 in Gestalt eines Nockens, der die Auf- und Abbewegung des Ausgleichsgewichts 34 auf eine Stützfläche 44 eines Pendelhebels 40 überträgt und diesen dadurch zu einer Pendelbewegung um seine Pendelachse 41 zwingt. Die Stützfläche 44 ist als Ringsegment ausgestaltet. Daher kann der Pendelhubgeber 36 die Stützfläche 33 auch in Verdrehpositionen des Pendelhebels 40 um die Hubstangenachse 21 beaufschlagen und den Pendelhub erzeugen. Der Pendelhebel 40 ist nur gemeinsam mit dem Träger 46 aus der Geradeausposition des Sägeblatts 28 um die Hubstangenachse 21 schwenkbar.

Der Pendelhebel 40 sitzt mit seiner Pendelachse 41 an einem Träger 46, der sich mit seinem unteren Bereich 48 hinter dem Sägeblatt fluchtend zu diesem nach hinten erstreckt und mit seinem oberen Bereich 50 ringartig die Hubstange 20 umgreift. Der Pendelhebel 40 stützt sich mit seiner am unteren Ende sitzenden drehbaren Führungsrolle 42 am Rücken des Sägeblatts 28 ab. Dabei umgreift er den Rücken des Sägeblatts 28 seitlich, wobei er dessen Abrollbewegung ermöglicht. Der obere Bereich 50 des Trägers 46 ist im Getriebegehäuse 13 axial unverschieblich aber um die Hubstangenachse 21 drehbar gelagert.

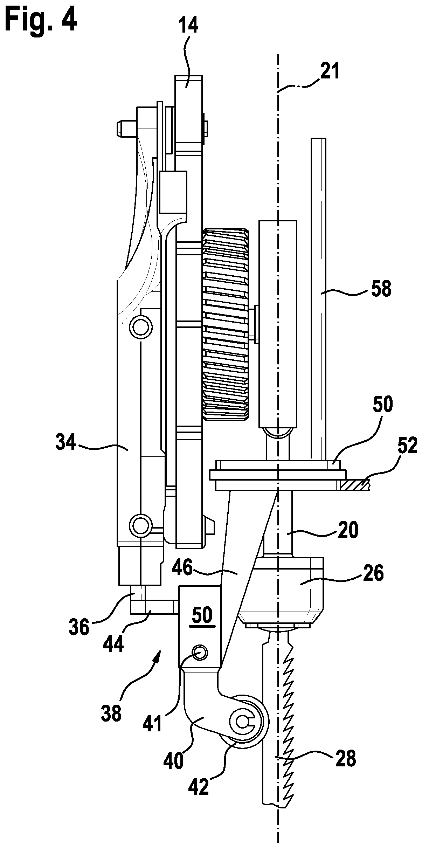

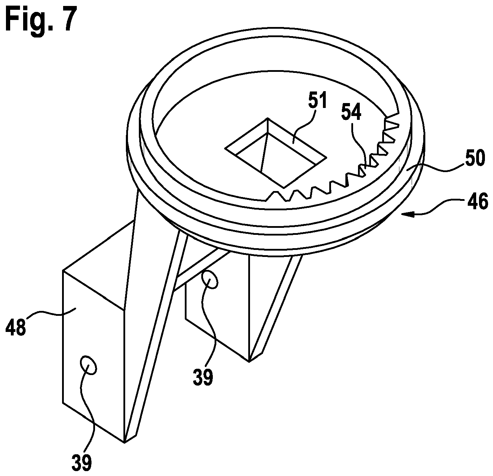

Mit einem mittigen Vierkantloch 51 (Fig. 7, 8) umgreift der Träger 46 die im Querschnitt rechteckige bzw. quadratische Hubstange 20, so dass diese ohne weiteres ihre vertikale Hubbewegung und ihren vor- und zurückgehenden Pendelhub ausführen kann. Wird der Träger 46 in einem Axiallager 50 (Fig. 4) um die Hubstangenachse 21 gedreht, folgt ihm dabei der Pendelhebel 40 und die Hubstange 20. Dazu ist das Vierkantloch 51 so bemessen, dass es quer nur geringes Spiel zur Hubstange 20 aber in Richtung des Pendelhubs erheblich mehr Spiel als in Querrichtung hat, das die Hubstange 20 für den Pendelhub benötigt.

Die Hubstange 20 trägt oben in eine Kulisse 18. Über diese wird die Hubstange 20 längs hin- und hergehend angetrieben. Die Kulisse 18 über ist vor der Vorderseite des plattenartigen Teils des Getriebegehäuses 13 in einer gehäusefesten Längsführung 16 auf und ab verschiebbar gelagert. Sie wird von einem Exzenterzapfen 32 eines zwischen dem plattenartigen Teil und der Hubstange angeordneten Exzenterzahnrades 30 in einem querverlaufenden Kulissenschlitz 17 durchgriffen. Der Exzenterzapfen 32 treibt die Kulisse 18 und gemeinsam mit ihr die Hubstange 20 an. Das Exzenterzahnrad 30 ist mit einer nach hinten weisenden Achse drehbar im plattenartigen Teil des Getriebegehäuses 13 gelagert.

Damit die Hubstange 20 sich um die Hubstangenachse 21 drehen kann, ist sie an einer Kulisse 18 mit einem die Hubstangenachse 21 definierenden Drehgelenk 22 drehbar gelagert. Unterhalb des Drehgelenks 22 hat die Hubstange 20 ein Pendelgelenk 24, das die Pendelbewegung der Hubstange 20 und des Sägeblatts 28 gemeinsam mit der Spanneinrichtung 26 ermöglicht.

Der Träger 46 ist in seinem oberen als Drehkranz ausgestalteten Bereich 50 mit einer Innenverzahnung 54, in die ein planetenradartiges Stellritzel 56 greift, das über eine vertikal nach oben verlegte Stellwelle 58 drehbar ist. Durch Drehbetätigung der Stellwelle 58 ist der Träger 46 und mit ihm der Pendelhebel 40, die Führungsrolle 42 sowie die Hubstange 20 dreheinstellbar. So kann mit der Stichsäge 10 innerhalb gewisser Grenzen im Scroll-Modus gesägt bzw. gescrollt werden, d.h. soweit die Stützfläche 44 abstützend mit dem Pendelhubgeber 36 kontaktierbar ist. Ist die Stützfläche als 180°-Ringsegement ausgestaltet, kann über diesen Winkelbereich gescrollt werden.

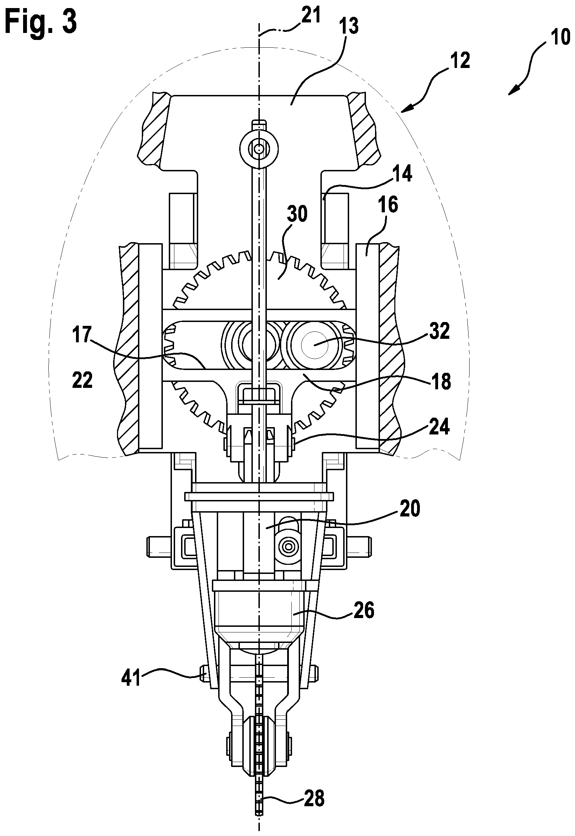

In Figur 3 ist in einem schematisch skizzierten Getriebegehäuse 13 eine Frontansicht gemäß Figur 2 gezeigt, die die Einzelheiten gemäß Figur 2 aus anderem Betrachtungswinkel verdeutlicht, insbesondere den plattenartigen Teil des Getriebegehäuses 13 und die Ausgestaltung des Exzenterrades 30, wobei die zu Figur 2 erläuterten Einzelheiten nicht nochmals beschrieben werden sollen.

In Figur 4 ist im schematisch skizzierten Getriebegehäuse 13 eine Seitenansicht gemäß Figur 2 gezeigt, wobei über Figur 3 hinausgehend das Axiallager 52 für den Drehkranz 50 des Trägers 46 dargestellt ist. Dabei sollen die zu Figur 2 erläuterten Einzelheiten nicht nochmals beschrieben werden.

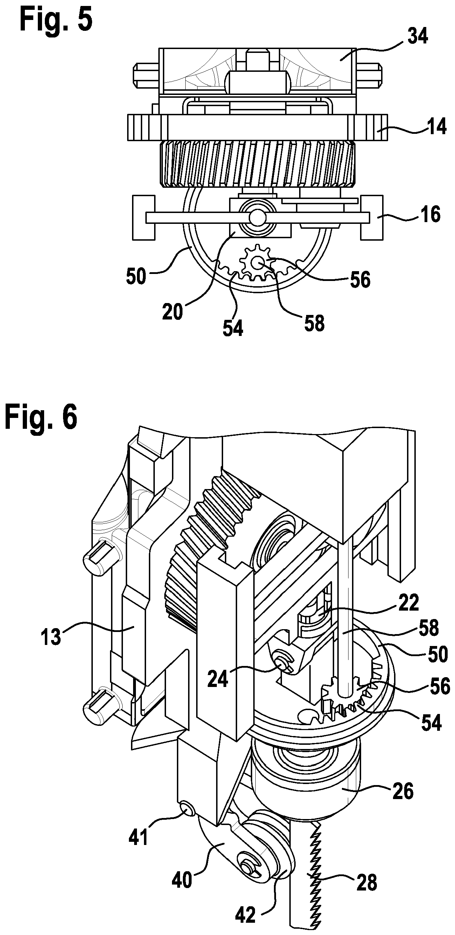

In Figur 5 ist im schematisch skizzierten Getriebegehäuse 13 eine Draufsicht gemäß Figur 2 gezeigt, wobei über Figur 3 hinausgehend das der Drehkranz 50 des Trägers 46 mit seiner Verzahnung 54 und dem Stellritzel 56 besonders gut erkennbar ist. Dabei sollen die zu Figur 2 erläuterten Einzelheiten nicht nochmals beschrieben werden.

In Figur 6 ist in einer weiteren, vergrößerten räumlichen Darstellung im Wesentlichen das Gleiche wie Figur 2 gezeigt, wobei über die dazu erläuterten Einzelheiten nicht nochmals beschrieben werden sollen.

In Figur 7 ist eine räumliche Ansicht des Trägers 46 als Einzelheit gezeigt, aus der der untere und obere Bereich 48, 50, die Verzahnung 54, das länglich bemessene Vierkantloch 51 und die Bohrungen 39 klar erkennbar sind.

Durch Drehen der Stellwelle um ihre Achse dreht sich der Träger mit seinem Drehkranz und somit auch der Rollenhebel und die Hubstange um ihre Achse mit. So wird die Winkelposition des Sägeblattes geändert und die Pendelfunktion ist gewährleistet. (synchron zu Sägeblatt).

Dabei kann die Steuerung der Hubstangendrehung über eine opto-elektronische Einheit autonom oder fernbedienbar übernommen werden.

## Patentansprüche

1. Handhubsägemaschine, insbesondere Stichsäge (10), mit einem Gehäuse (12, 13) und mit einer Hubstange (20) mit einer Pendelmechanik (38), insbesondere mit Pendelhebel (40), mit der einem von der Hubstange (20) getragenen Sägeblatt (28), insbesondere Hubsägeblatt, beim Sägen ein Pendelhub erteilbar ist, wobei die Hubstange (20) sowohl um die eigene Längsachse (21) drehbar als auch quer zu dieser Längsachse (21) schwenkbar angeordnet ist, **dadurch gekennzeichnet, dass** die Pendelmechanik (38) um die genannte Längsachse (21) der Hubstange (20) drehbar ist.

2. Handhubsägemaschine nach Anspruch 1, **dadurch gekennzeichnet, dass** die Pendelmechanik (38) einen Pendelhebel (40) und einen Träger (46) aufweist, wobei der Pendelhebel (40), insbesondere um eine Pendelachse (41), pendelbar am Träger (46) gelagert ist, der drehbar, insbesondere im Gehäuse (13), gelagert ist.

3. Handhubsägemaschine nach Anspruch 1, **dadurch gekennzeichnet, dass** die Hubstange (20) axial gegenüber dem Träger (46) verschiebbar ist.

4. Handhubsägemaschine nach Anspruch 1, **dadurch gekennzeichnet, dass** der Träger (46) als Drehmitnahmemittel zum Einstellen einer Dreh-Winkelposition des Sägeblatts (28) bzw. der Hubstange (20) dient.

5. Handhubsägemaschine nach Anspruch 1 oder 2, **dadurch gekennzeichnet, dass** der Pendelhebel (40) mit Mitteln (44) versehen ist, die in jeder seiner möglichen Drehpositionen die Übertragung eines Pendelhubs auf das Sägeblatt (28) gewährleisten.

6. Handhubsägemaschine nach Anspruch 3, **dadurch gekennzeichnet, dass** die Mittel als vom Pendelhebel getragene Stützfläche (44) ausgestaltet sind, die über den Drehbereich des Pendelhebels (40) einem Pendelhubgeber (36) hubbeaufschlagbar zugewandt ist.

7. Handhubsägemaschine nach Anspruch 6, **dadurch gekennzeichnet, dass** die Stützfläche (44) ringförmig, insbesondere als Kreisringsegment, ausgestaltet ist, die starr mit dem Pendelhebel (40) verbunden ist.

8. Handhubsägemaschine nach einem der Ansprüche 2 bis 5, **dadurch gekennzeichnet, dass** der Träger (46) axial fest, drehbar, insbesondere im Gehäuse (13), gelagert ist.

9. Handhubsägemaschine nach Anspruch 6, **dadurch gekennzeichnet, dass** der Träger (46) mittels Getriebe (50, 54, 56) von außen dreheinstellbar ist.

10. Handhubsägemaschine nach einem der Ansprüche 2 bis 7, **dadurch gekennzeichnet, dass** der Träger (46) ringförmig die Hubstange (20) umgreift und eine Verzahnung (54) trägt, mit der ein Stellritzel (56) kuppelbar ist, das mittels Stellmechanik (58), motorisch oder von Hand drehantreibbar ist.

11. Handhubsägemaschine nach Anspruch 10, **dadurch gekennzeichnet, dass** die Stellmechanik des Stellritzels (56) eine drehantreibbare Stellwelle (58) aufweist.

12. Handhubsägemaschine nach Anspruch 11, **dadurch gekennzeichnet, dass** die Stellwelle (58) von Hand drehwinkelkontrolliert dreheinstellbar ist.

13. Handhubsägemaschine nach Anspruch 11, **dadurch gekennzeichnet, dass** die Stellwelle (58) mit einem Handdrehhebel, Drehknauf oder dergl. koppelbar ist, der mit einem gegenüber einer Winkelskala einstellbaren Zeiger versehen ist.

14. Handhubsägemaschine nach Anspruch 11, **dadurch gekennzeichnet, dass** die Stellwelle (58) mittels Stellmotor sensor-gesteuert dreheinstellbar ist.

## Claims

1. Portable reciprocating sawing machine, in particular jigsaw (10), having a housing (12, 13) and having a reciprocating rod (20) with a swing mechanism (38), in particular with a swing lever (40), with which a pendulum stroke is able to be imparted during sawing to a saw blade (28), in particular a reciprocating saw blade, carried by the reciprocating rod (20), wherein the reciprocating rod (20) is arranged both so as to be rotatable about its own longitudinal axis (21) and so as to be pivotable transversely to this longitudinal axis (21), **characterized in that** the pendulum mechanism (38) is rotatable about said longitudinal axis (21) of the reciprocating rod (20).

2. Portable reciprocating sawing machine according to Claim 1, **characterized in that** the pendulum mechanism (38) has a pendulum lever (40) and a carrier (46), wherein the pendulum lever (40) is mounted on the carrier (46) so as to be able to swing, in particular about a pendulum axis (41), said carrier (46) being mounted in a rotatable manner, in particular in the housing (13).

3. Portable reciprocating sawing machine according to Claim 1, **characterized in that** the reciprocating rod (20) is displaceable axially with respect to the carrier (46).

4. Portable reciprocating sawing machine according to Claim 1, **characterized in that** the carrier (46) serves as a rotary entrainment means for setting a rotation angle position of the saw blade (28) or of the reciprocating rod (20).

5. Portable reciprocating sawing machine according to Claim 1 or 2, **characterized in that** the pendulum lever (40) is provided with means (44) which, in each of its possible rotary positions, ensure that a pendulum stroke is transmitted to the saw blade (28).

6. Portable reciprocating sawing machine according to Claim 3, **characterized in that** the means are configured as a supporting surface (44) carried by the pendulum lever, said supporting surface (44) facing a pendulum stroke transmitter (36) so as to be able to be acted on by a stroke over the rotary range of the pendulum lever (40).

7. Portable reciprocating sawing machine according to Claim 6, **characterized in that** the supporting surface (44) is configured in an annular manner, in particular as a circular ring segment, and is connected rigidly to the pendulum lever (40).

8. Portable reciprocating sawing machine according to one of Claims 2 to 5, **characterized in that** the carrier (46) is mounted in an axially fixed, rotatable manner, in particular in the housing (13).

9. Portable reciprocating sawing machine according to Claim 6, **characterized in that** the carrier (46) is rotationally settable from the outside by means of a gear mechanism (50, 54, 56).

10. Portable reciprocating sawing machine according to one of Claims 2 to 7, **characterized in that** the carrier (46) engages annularly around the reciprocating rod (20) and carries a toothing (54) to which an actuating pinion (56) is able to be coupled, which is able to be driven in rotation by means of an actuating mechanism (58), by a motor or by hand.

11. Portable reciprocating sawing machine according to Claim 10, **characterized in that** the actuating mechanism of the actuating pinion (56) has an actuating shaft (58) that is able to be driven in rotation.

12. Portable reciprocating sawing machine according to Claim 11, **characterized in that** the actuating shaft (58) is rotationally settable by hand under rotation angle control.

13. Portable reciprocating sawing machine according to Claim 11, **characterized in that** the actuating shaft (58) is able to be coupled to a manual pivoted lever, rotary knob or the like, which is provided with a pointer that is settable with respect to an angular scale.

14. Portable reciprocating sawing machine according to Claim 11, **characterized in that** the actuating shaft (58) is rotationally settable under sensor control by means of an actuator.

## Revendications

1. Scie à mouvement alternatif manuelle, en particulier scie sauteuse (10), comprenant un boîtier (12, 13) et une barre d'entraînement (20) avec un mécanisme pendulaire (38), en particulier un levier pendulaire (40), avec laquelle une course pendulaire peut être conférée lors du sciage à une lame de scie (28) portée par la barre d'entraînement (20), en particulier une lame de scie à mouvement alternatif, la barre d'entraînement (20) étant disposée à la fois de manière à pouvoir tourner autour de son propre axe longitudinal (21) et de manière à pouvoir être pivotée transversalement à cet axe longitudinal (21),
**caractérisée en ce que**
le mécanisme pendulaire (38) peut tourner autour dudit axe longitudinal (21) de la barre d'entraînement (20).

2. Scie à mouvement alternatif manuelle selon la revendication 1, **caractérisée en ce que** le mécanisme pendulaire (38) présente un levier pendulaire (40) et un support (46), le levier pendulaire (40), étant supporté de manière pendulaire sur le support (46), en particulier autour d'un axe pendulaire (41), qui est supporté à rotation, en particulier dans le boîtier (13).

3. Scie à mouvement alternatif manuelle selon la revendication 1, **caractérisée en ce que** la barre d'entraînement (20) peut être déplacée axialement par rapport au support (46).

4. Scie à mouvement alternatif manuelle selon la revendication 1, **caractérisée en ce que** le support (46) sert de moyen d'entraînement en rotation pour ajuster une position angulaire de rotation de la lame de scie (28) ou de la barre d'entraînement (20).

5. Scie à mouvement alternatif manuelle selon la revendication 1 ou 2, **caractérisée en ce que** le levier pendulaire (40) est pourvu de moyens (44) qui garantissent, dans chacune de ses positions de rotation possibles, le transfert d'une course pendulaire à la lame de scie (28).

6. Scie à mouvement alternatif manuelle selon la revendication 3, **caractérisée en ce que** les moyens sont configurés sous forme de surface de support (44) portée par le levier pendulaire, qui est tournée vers un capteur de course pendulaire (36) de manière à pouvoir être sollicitée par celui-ci avec un mouvement alternatif par le biais de la région de rotation du levier pendulaire (40).

7. Scie à mouvement alternatif manuelle selon la revendication 6, **caractérisée en ce que** la surface de support (44) est configurée sous forme annulaire, en particulier sous forme de segment annulaire circulaire qui est connecté rigidement au levier pendulaire (40).

8. Scie à mouvement alternatif manuelle selon l'une quelconque des revendications 2 à 5, **caractérisée en ce que** le support (46) est supporté axialement fixement, à rotation, en particulier dans le boîtier (13).

9. Scie à mouvement alternatif manuelle selon la revendication 6, **caractérisée en ce que** le support (46) peut être ajusté en rotation depuis l'extérieur au moyen d'engrenages (50, 54, 56).

10. Scie à mouvement alternatif manuelle selon l'une quelconque des revendications 2 à 7, **caractérisée en ce que** le support (46) vient en prise sous forme annulaire autour de la barre d'entraînement (20) et porte une denture (54) avec laquelle un pignon de réglage (56) peut être accouplé, lequel peut être entraîné en rotation au moyen d'un mécanisme de réglage (58), par le biais d'un moteur ou à la main.

11. Scie à mouvement alternatif manuelle selon la revendication 10, **caractérisée en ce que** le mécanisme de réglage du pignon de réglage (56) présente un arbre de réglage (58) pouvant être entraîné en rotation.

12. Scie à mouvement alternatif manuelle selon la revendication 11, **caractérisée en ce que** l'arbre de réglage (58) peut être ajusté en rotation manuellement avec contrôle de l'angle de rotation.

13. Scie à mouvement alternatif manuelle selon la revendication 11, **caractérisée en ce que** l'arbre de réglage (58) peut être accouplé à un levier rotatif manuel, un bouton tournant ou similaire, qui est pourvu d'un indicateur pouvant être ajusté par rapport à une échelle angulaire.

14. Scie à mouvement alternatif manuelle selon la revendication 11, **caractérisée en ce que** l'arbre de réglage (58) peut être ajusté en rotation au moyen d'un moteur de réglage par commande par un capteur.
